# EUROPEAN PATENT APPLICATION

(11) **EP 4 819 294 A1**
(43) Date of publication of application: **07.10.2026**
(21) Application number: 24895997.5
(22) Date of filing: 30.09.2024
(51) Int. Cl.: H01M 10/613, H01M 10/617, H01M 10/6556, H01M 10/6568

(54) **HEAT EXCHANGE ASSEMBLY, BATTERY PACK, AND ELECTRIC SYSTEM**

(30) Priority: 28.11.2023 CN 202323238978 U
(71) Applicant: BYD Company Limited, Shenzhen, Guangdong 518118 (CN)
(72) Inventor: FENG, Jiamao, Shenzhen, Guangdong 518118 (CN); YU, Yelong, Shenzhen, Guangdong 518118 (CN); LIU, Zepeng, Shenzhen, Guangdong 518118 (CN); DUAN, Zhenzhen, Shenzhen, Guangdong 518118 (CN); PENG, Qingbo, Shenzhen, Guangdong 518118 (CN)
(74) Representative: Mathys & Squire
(86) International application number: PCT/CN2024/123092
(87) International publication number: WO 2025/112903

(57) **Abstract**

An electric system, including a battery pack. The battery pack includes a heat exchange assembly, and the heat exchange assembly is used for carrying out heat exchange on a battery in the battery pack. The heat exchange assembly includes a heat exchange component; the heat exchange component at least includes two heat exchange channel groups and two flow convergence channel groups; the two heat exchange channel groups are independently arranged; the two flow convergence channel groups are independently arranged; and each heat exchange channel group is correspondingly in communication with one flow convergence channel group.

## Description

### CROSS-REFERENCE TO RELATED APPLICATIONS

The present disclosure claims priority to Chinese Patent Application No. 202323238978.5 filed with the China National Intellectual Property Administration on November 28, 2023, titled "HEAT EXCHANGE ASSEMBLY, BATTERY PACK, AND ELECTRIC SYSTEM ", which is incorporated herein by reference in its entirety.

### FIELD

The present disclosure relates to the technical field of electric systems, and in particular, to a heat exchange assembly, a battery pack, and an electric system.

### BACKGROUND

In the related art, when a battery component is charged and discharged, a large temperature difference occurs in different regions, thereby affecting the performance and safety of the battery. However, current heat exchange structures are unable to accommodate the heat exchange requirements of different regions of the battery component.

### SUMMARY

The present disclosure aims to solve at least one of the technical problems existing in the related art. Therefore, the present disclosure proposes a heat exchange assembly, the heat exchange assembly can independently regulate the flow rate of a heat exchange medium at different positions of a battery in a battery pack, facilitating cooling and heat dissipation of the battery, also reducing the volume of the heat exchange assembly, and saving installation space for the heat exchange assembly.

The present disclosure further proposes a battery pack.

The present disclosure further proposes an electric system.

A heat exchange assembly according to the present disclosure is configured to perform exchange heat on a battery in a battery pack, and the heat exchange assembly includes a heat exchange component. The heat exchange component at least includes two heat exchange channel groups, and the two heat exchange channel groups are independently arranged. The heat exchange component further at least includes two confluence channel groups, the two confluence channel groups are independently arranged, and each of the heat exchange channel groups is correspondingly in communication with one confluence channel group.

According to the heat exchange assembly of the present disclosure, by correspondingly communicating each of the heat exchange channel groups with one confluence channel group, arranging each of the heat exchange channels independently, and arranging each of the confluence channel groups independently, the heat exchange media with different flow rates can correspond to heat generation regions at different positions of the battery. That is, the heat exchange channel groups are independently arranged, to ensure that each of the heat exchange channel groups can independently control the flow rate of the heat exchange medium. That is, the flow rate of the heat exchange medium at different positions of the battery in the battery pack can be independently regulated, which is beneficial for cooling and heat dissipation of the battery. Furthermore, the heat exchange component can split and converge the flowing heat exchange medium, avoiding the need to arrange a plurality of connecting pipes to introduce the heat exchange medium into the at least two heat exchange channel groups, reducing the number of parts, and improving the integration level of the heat exchange assembly, thereby reducing the volume of the heat exchange assembly and saving installation space for the heat exchange assembly.

According to an embodiment of the present disclosure, the heat exchange assembly includes a flow channel plate and a first mounting plate, and the heat exchange channel group is defined between the first mounting plate and the flow channel plate. The heat exchange assembly further includes a confluence plate and a second mounting plate, the confluence channel group is defined between the second mounting plate and the confluence plate, and the confluence channel group is in communication with the heat exchange channel group.

According to an embodiment of the present disclosure, the first mounting plate and the second mounting plate are oppositely arranged, the flow channel plate is arranged on a side of the first mounting plate away from the second mounting plate, and the confluence plate is arranged on a side of the second mounting plate away from the first mounting plate.

According to an embodiment of the present disclosure, the first mounting plate and the second mounting plate are arranged in close contact, and the first mounting plate is arranged with a first through hole communicating with the heat exchange channel group, the second mounting plate is arranged with a second through hole communicating with the confluence channel group, and the first through hole is in communication with the second through hole, to ensure the heat exchange channel group is in communication with the corresponding confluence channel group.

According to an embodiment of the present disclosure, the confluence plate includes a main plate and a plurality of partition plates, the main plate and the second mounting plate together enclose to form a cavity, and the plurality of partition plates are spaced apart in the cavity to partition the cavity into at least two confluence channel groups.

According to an embodiment of the present disclosure, the heat exchange channel group is arranged with a first inlet and a first outlet, the confluence channel group includes an inlet channel and an outlet channel, the first inlet of the heat exchange channel group is in communication with the inlet channel of the corresponding confluence channel group, and the first outlet of the heat exchange channel group is in communication with the outlet channel of the corresponding confluence channel group.

According to an embodiment of the present disclosure, the first inlet of the heat exchange channel group and the first outlet of the heat exchange channel group are located on the same side.

According to an embodiment of the present disclosure, the heat exchange channel group is arranged with a plurality of heat exchange channels, and the plurality of heat exchange channels are spaced apart in a first direction.

According to an embodiment of the present disclosure, the first inlet and the first outlet of the same heat exchange channel are located on the same side and are offset in the first direction.

According to an embodiment of the present disclosure, the heat exchange channel extends in a second direction, and in the second direction, a distance between the first inlet and the first outlet of the same heat exchange channel is in a range of 5 mm to 8 mm.

According to an embodiment of the present disclosure, the first inlets of the plurality of heat exchange channels are spaced apart along a first straight line, and the first outlets of the plurality of heat exchange channels are spaced apart along a second straight line.

According to an embodiment of the present disclosure, the first straight line is arranged parallel to the second straight line.

According to an embodiment of the present disclosure, both the first straight line and the second straight line coincide with the first direction.

According to an embodiment of the present disclosure, the first mounting plate and the second mounting plate are of an integral structure.

According to an embodiment of the present disclosure, the heat exchange assembly further includes a valve component, the valve component is arranged with a plurality of second outlets, the confluence channel group includes an inlet channel, and one of the second outlets is in communication with the inlet channel of one of the confluence channel groups.

According to an embodiment of the present disclosure, the heat exchange assembly further includes a first connection pipe, and the first connection pipe is connected between the second outlet and the inlet channel of the confluence channel group.

According to an embodiment of the present disclosure, the heat exchange assembly further includes an adjusting member, the adjusting member is movably arranged at the second outlet to adjust a flow area at the second outlet; or the adjusting member is movably arranged in the first connection pipe to adjust a flow area in the first connection pipe.

According to an embodiment of the present disclosure, the heat exchange assembly further includes a heating member, the heating member is arranged in a channel of the valve component in communication with the second outlet; and/or the heating member is arranged in the first connection pipe.

According to an embodiment of the present disclosure, the heat exchange component includes a first heat exchange member and a second heat exchange member, the valve component has a first side and a second side oppositely arranged, both the first side and the second side are arranged with a plurality of the second outlets, the plurality of second outlets located on the first side are respectively in communication with the confluence member arranged on the first heat exchange member, and the plurality of second outlets located on the second side are respectively in communication with the confluence member arranged on the second heat exchange member; or one side of the valve component is arranged with a plurality of the second outlets, the second outlet includes a first heat exchange outlet and a second heat exchange outlet, the plurality of first heat exchange outlets are respectively in communication with the confluence member arranged on the first heat exchange member, and the plurality of second heat exchange outlets are respectively in communication with the confluence member arranged on the second heat exchange member.

According to an embodiment of the present disclosure, the valve component is further arranged with a plurality of second inlets, the confluence channel group further includes an outlet channel, and one of the second inlets is in communication with the outlet channel of one of the confluence channel groups.

According to a battery pack in an embodiment of the present disclosure, the battery pack includes the above heat exchange assembly.

According to an embodiment of the present disclosure, the battery pack further includes a battery component, the battery component at least includes a first temperature region and a second temperature region, wherein one of the heat exchange channel groups of the heat exchange component is arranged corresponding to the first temperature region, and the other heat exchange channel group is arranged corresponding to the second temperature region, to independently adjust the battery temperature in the first temperature region and the second temperature region.

According to an embodiment of the present disclosure, the battery component includes a plurality of single batteries, the single batteries extend in a first direction, the plurality of single batteries are arranged in a second direction, and the first direction is perpendicular to the second direction.

The single battery is arranged with a terminal, a region of the battery component adjacent to the terminal of each of the single batteries is the first temperature region, and the remaining region of the battery component excluding the first temperature region is the second temperature region.

One of the heat exchange channel groups of the heat exchange component exchanges heat with a portion of the battery component corresponding to the first temperature region, and the other heat exchange channel group of the heat exchange component exchanges heat with a portion of the battery component corresponding to the second temperature region.

According to an embodiment of the present disclosure, each of the single batteries at least has two terminals, the two terminals are respectively arranged at two ends of the corresponding single battery in the second direction, the first temperature region has a first sub-temperature region and a second sub-temperature region, wherein a corresponding portion of the battery component adjacent to the terminal on one side is the first sub-temperature region, a corresponding portion of the battery component adjacent to the terminal on the other side is the second sub-temperature region, and the second temperature region is located between the first sub-temperature region and the second sub-temperature region.

One of heat exchange channel groups in the heat exchange component has a first heat exchange sub-channel group and a second heat exchange sub-channel group, wherein the first heat exchange sub-channel group exchanges heat with a portion of the battery component corresponding to the first sub-temperature region, and the second heat exchange sub-channel group exchanges heat with a portion of the battery component corresponding to the second sub-temperature region.

According to an embodiment of the present disclosure, the heat exchange component is arranged on one side of the battery component.

An electric system according to the present disclosure, includes the above battery pack.

Additional aspects and advantages of the present disclosure will be set forth in part in the description that follows, and in part will become apparent from the following description, or may be learned through practice of the present disclosure.

### BRIEF DESCRIPTION OF THE DRAWINGS

The above and/or additional aspects and advantages of the present disclosure will become apparent and readily understood from the description of the embodiments taken in conjunction with the following drawings.
FIG. 1 is a schematic structural diagram of a heat exchange assembly for a battery pack according to an embodiment of the present disclosure, viewed from a first angle;
FIG. 2 is an exploded view of the heat exchange assembly for a battery pack;
FIG. 3 is a schematic structural diagram of a heat exchange component;
FIG. 4 is a schematic structural diagram of a valve component, viewed from a first angle;
FIG. 5 is a schematic structural diagram of the valve component, viewed from a second angle;
FIG. 6 is a schematic diagram of a cross-sectional structure of the valve component;
FIG. 7 is a schematic structural diagram of the heat exchange assembly for a battery pack according to an embodiment of the present disclosure, viewed from a second angle;
FIG. 8 is a schematic structural diagram of a heat exchange assembly according to an embodiment of the present disclosure;
FIG. 9 is a schematic structural diagram of a heating member in a valve according to an embodiment of the present disclosure;
FIG. 10 is a schematic structural diagram of a mounting plate and a through hole according to an embodiment of the present disclosure;

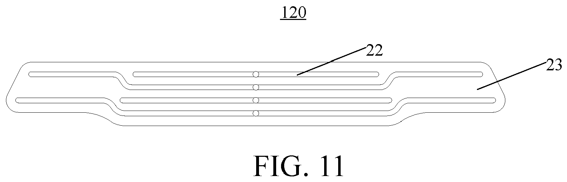

FIG. 11 is a schematic structural diagram of a confluence plate according to an embodiment of the present disclosure;

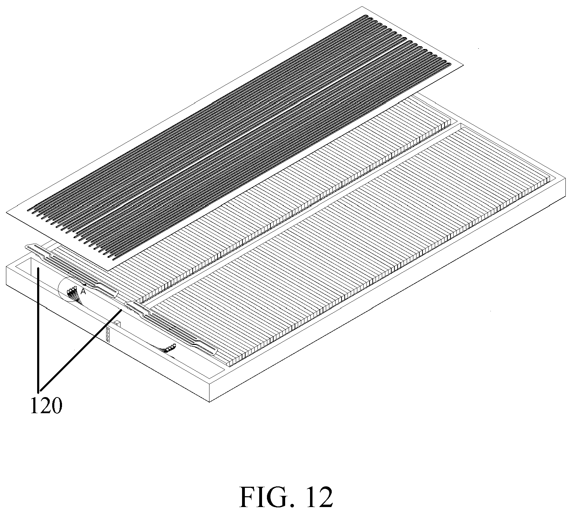

FIG. 12 is a simplified schematic diagram of a heat exchange assembly according to the present disclosure;
FIG. 13 is a schematic block diagram of a battery pack according to an embodiment of the present disclosure; and
FIG. 14 is a schematic block diagram of an electric system according to an embodiment of the present disclosure.

### Reference Numbers:

Electric system 1000, Battery pack 100, Confluence plate 120,
Heat exchange assembly 1,
Heat exchange component 10, Heat exchange member 11, First heat exchange member 110, Heat exchange channel group 111, Flow channel plate 12, Heat exchange channel 121, First inlet 1211, First outlet 1212, First mounting plate 13, First through hole 131, Second mounting plate 14, Second through hole 141, Confluence member 20, Confluence channel group 21, Inlet channel 211, Outlet channel 212, Main plate 22, Partition plate 23, Valve component 30, Second inlet 31, Second outlet 32, First heat exchange outlet 321, Third inlet 33, Third outlet 34, Adjusting member 40, Control component 50, Heating member 60, Battery component 70, First module region 2, and Second module region 3.

### DETAILED DESCRIPTION

Embodiments of the present disclosure are described in detail below. The embodiments described with reference to the drawings are illustrative.

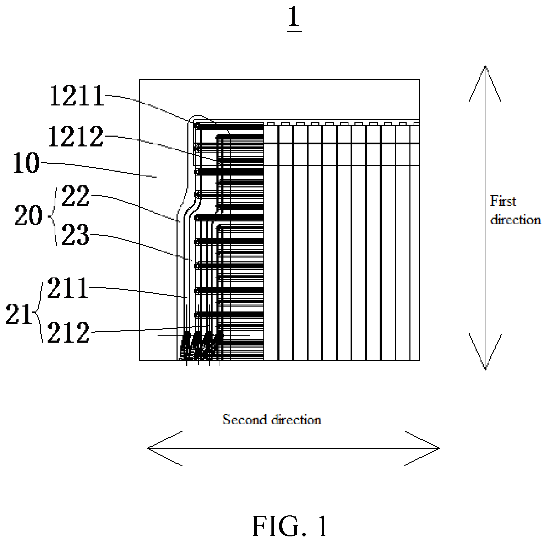

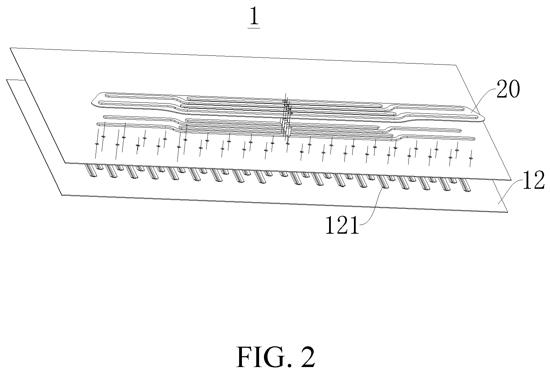

A heat exchange assembly 1 according to an embodiment of the present disclosure is described below with reference to FIGS. 1 to 7. The heat exchange assembly 1 is mainly configured to perform heat exchange on batteries in the battery pack, thereby reducing the temperature of the battery pack and enabling the battery pack to operate normally.

As shown in FIGS. 1 to 7, the heat exchange assembly 1 according to an embodiment of the present disclosure includes a heat exchange component 10. The heat exchange component 10 at least includes two heat exchange channel groups 111, and the two heat exchange channel groups 111 are independently arranged. The heat exchange component 10 further at least includes two confluence channel groups 21, and the two confluence channel groups 21 are independently arranged, and each of the heat exchange channel groups 11 is correspondingly in communication with one confluence channel group 21.

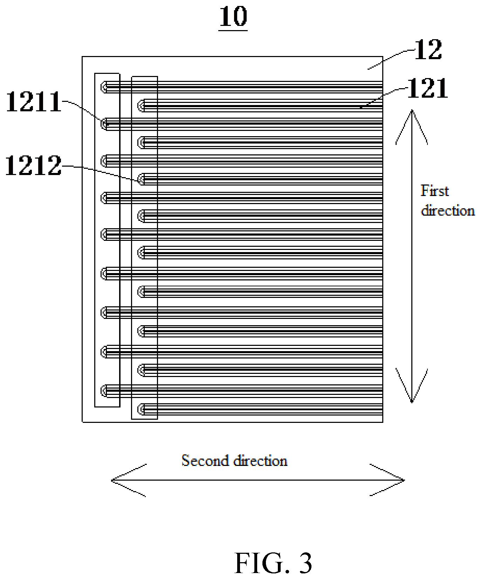

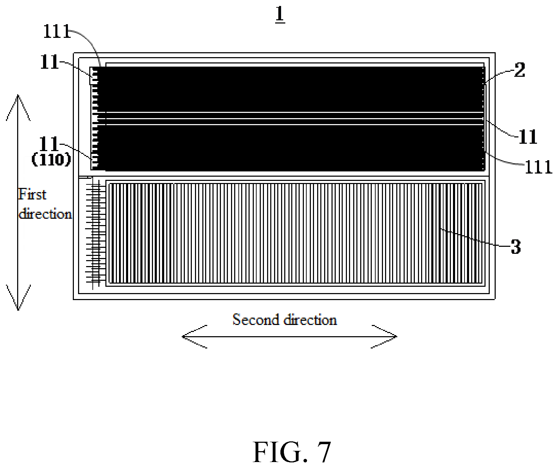

In an embodiment, as shown in FIGS. 3 and 7, the heat exchange component 10 includes a heat exchange member 11 and a confluence member 20. The heat exchange member 11 primarily serves a heat exchange function, and the heat exchange member 11 can perform exchange heat on the battery pack, thereby enabling the battery pack to operate normally. The number of heat exchange members 11 is a plurality of, a heat exchange channel group 111 is arranged in each of the heat exchange members 11, and two heat exchange channel groups 111 in any two heat exchange members 11 are independently arranged. The confluence member 20 primarily serves distribution and confluence functions, and at least two confluence channel groups 21 are arranged on the confluence member 20, and the two confluence channel groups 21 are independently arranged. The heat exchange medium may circulate in the heat exchange channel group 111 and the confluence channel group 21, and the heat exchange medium may be a liquid heat exchange medium or a gas heat exchange medium.

It will be noted that different parts of the battery may generate different amounts of heat, and at least two heat exchange channel groups 111 correspond to different heat-generating parts of the battery. By arranging at least two heat exchange channel groups 111, the heat exchange member 11 can perform exchange heat on the battery more comprehensively.

Generally, at least two heat exchange channel groups 111 are arranged, and the heat exchange temperatures between the two heat exchange channel groups 111 are different. That is, the flow rate of the heat exchange medium flowing through each of the heat exchange channel group 111 and the like are different. For example, the heat exchange channel group 111 where the heat exchange medium with a higher flow rate is located corresponds to a position where the battery generates more heat, while the heat exchange channel group 111 where the heat exchange medium with a lower flow rate is located corresponds to a position where the battery generates less heat. In this way, heat exchange can be performed on the battery more effectively according to the heat generation conditions of the battery in different heat exchange channel groups 111, thereby achieving temperature uniformity of the battery component.

In some embodiments of the present disclosure, a plurality of heat exchange members 11 are an integral structural member, such as a stamped and brazed heat exchange plate, and the heat exchange members 11 are portions of the integral structural member. A plurality of heat exchange channels are divided into a plurality of independent heat exchange channel groups, thereby achieving independent heat dissipation or cooling. Furthermore, in other embodiments of the present disclosure, a plurality of heat exchange members 11 may be independent components, thereby being spaced apart and independently.

As shown in FIG. 1, the confluence member 20 is arranged on the heat exchange member 11, and each of the heat exchange channel groups 111 is correspondingly in communication with one confluence channel group 21. Arranging the confluence member 20 on the heat exchange member 11 can fix the confluence member 20, making the arrangement of the confluence member 20 more secure and stable, so that the confluence member 20 can operate better. It will be noted that the heat exchange medium flows from the confluence member 20 into the heat exchange member 11, and after performing exchange heat on the battery, flows back into the confluence member 20. Therefore, arranging the confluence member 20 on the heat exchange member 11 facilitates cooperation between the confluence member 20 and the heat exchange member 11, thereby facilitating the circulation of the heat exchange medium.

The confluence channel group 21 mainly serves to guide the circulation of the heat exchange medium. Arranging the confluence channel group 21 on the confluence member 20 allows the heat exchange medium to circulate on the confluence member 20, thereby facilitating the splitting or converging of the heat exchange medium within the confluence member 20. At least two confluence channel groups 21 are arranged, and the at least two confluence channel groups 21 are independently arranged, making the arrangement more reasonable, increasing the channels for splitting and converging, and avoiding interference between adjacent confluence channel groups 21.

Each of the heat exchange channel groups 111 is correspondingly in communication with one confluence channel group 21. It will be noted that the flow rates of the heat exchange medium introduced into different confluence channel groups 21 are different. Each of the heat exchange channel groups 111 is correspondingly in communication with one confluence channel group 21, so that the heat exchange media with different flow rates can be correspondingly introduced into the required heat exchange channel groups 111, thereby enabling different heat exchange temperatures between the at least two heat exchange channel groups 111, thus cooling the battery more effectively.

Therefore, by correspondingly communicating each of the heat exchange channel groups 111 with one confluence channel group 21, the heat exchange media with different flow rates can correspond to heat generation regions at different positions of the battery. That is, the flow rate of the heat exchange medium at different positions of the battery in the battery pack can be independently regulated, which is beneficial for cooling and heat dissipation of the battery. Furthermore, the heat exchange component 10 can split and converge the flowing heat exchange medium, avoiding the need to arrange a plurality of connecting pipes to introduce the heat exchange medium into the at least two heat exchange channel groups 111, reducing the number of parts, and improving the integration level of the heat exchange assembly 1, thereby reducing the volume of the heat exchange assembly 1 and saving installation space for the heat exchange assembly 1.

Furthermore, in some embodiments of the present disclosure, by arranging the two heat exchange channel groups 111 independently, the heat exchange component 10 can ensure independent control of each of the heat exchange channel groups 111, so as to independently adjust the flow rate of the heat exchange medium in each of the heat exchange channel groups 111, thereby ensuring heat exchange at different positions of the battery component, and achieving temperature uniformity between different positions of the battery component.

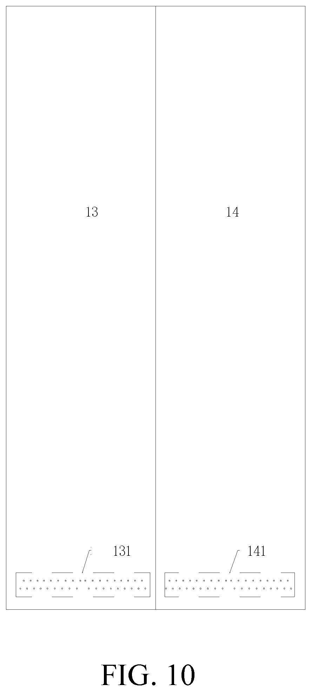

It will be noted that, in some embodiments of the present disclosure, as shown in FIG. 10, the heat exchange component 10 includes a flow channel plate 12 and a first mounting plate 13, and a heat exchange channel group 111 is defined between the flow channel plate 12 and the first mounting plate 13. The flow channels of the heat exchange channel group 111 may be formed on the flow channel plate 12, and the first mounting plate 13 may seal the flow channels to prevent leakage of the heat exchange medium, thereby defining the overall structure of the heat exchange channel group 111.

Similarly, as shown in FIG. 10, the heat exchange component 10 further includes a confluence plate 120 and a second mounting plate 14, and a confluence channel group 21 is defined between the confluence plate 120 and the second mounting plate 14. The confluence channel group 21 is in communication with the heat exchange channel group 111. The flow channels of the confluence channel group 21 may be formed on the confluence plate 120, and the second mounting plate 14 may seal the flow channels to prevent leakage of the heat exchange medium, thereby defining the overall structure of the confluence channel group 21.

Further, as shown in FIG. 10, in some embodiments of the present disclosure, the first mounting plate 13 and the second mounting plate 14 are oppositely arranged, the flow channel plate 12 is arranged on a side of the first mounting plate 13 away from the second mounting plate 14, and the confluence plate 120 is arranged on a side of the second mounting plate 14 away from the first mounting plate 13. That is, the flow channel plate 12 and the confluence plate 120 are arranged away from each other, so that the arrangement is more reasonable, installation space can be saved, and designing the heat exchange channel group 111 on the flow channel plate 12 does not interfere with the arrangement of the confluence plate 120. Furthermore, in the above embodiment, the arrangement of the flow channel plate 12, the first mounting plate 13, the second mounting plate 14, and the confluence plate 120 can improve the utilization of the heat exchange component 10 in the thickness direction, thereby adapting to different battery packs and saving space in the length direction or width direction.

Further, as shown in FIG. 10, in some embodiments of the present disclosure, the first mounting plate 13 and the second mounting plate 14 are arranged in close contact, and the first mounting plate 13 is arranged with a first through hole 131 communicating with the heat exchange channel group 111, the second mounting plate 14 is arranged with a second through hole 141 communicating with the confluence channel group 21, and the first through hole 131 is in communication with the second through hole 141, so that the heat exchange channel group 111 is in communication with the corresponding confluence channel group 21. The heat exchange channel group 111 is arranged on the flow channel plate 12, the first mounting plate 13 is arranged with the first through hole 131 communicating with the heat exchange channel group 111, and the second mounting plate 14 is arranged with the second through hole 141 communicating with the confluence channel group 21. Since the first mounting plate 13 and the second mounting plate 14 are arranged between the flow channel plate 12 and the confluence plate 120, the first through hole 131 and the second through hole 141 can be in communication with the corresponding confluence channel group 21 and heat exchange channel group 111, so that the external heat exchange medium can be sequentially passed through the confluence channel group 21, the second through hole 141, and the first through hole 131 into the heat exchange channel group 111, thereby achieving heat exchange for the battery. The heat exchange medium after heat exchange can also be flowed back into the confluence channel group 21 through the corresponding first through hole 131 and second through hole 141, thus forming a heat exchange circuit for the heat exchange medium.

In some embodiments of the present disclosure, as shown in FIG. 10, the first mounting plate 13 and the second mounting plate 14 are of an integral structure. Arranging the first mounting plate 13 and the second mounting plate 14 as an integral structure can improve the integration level of the heat exchange assembly 1, facilitate the installation and arrangement of the first mounting plate 13 and the second mounting plate 14, improve the assembly efficiency of the heat exchange assembly 1, and also reduce the manufacturing cost of the heat exchange component.

Furthermore, in some embodiments of the present disclosure, as shown in FIG. 1, the confluence plate 120 includes: a main plate 22 and a plurality of partition plates 23, the main plate 22 and the second mounting plate 14 together enclose to form a cavity, and the plurality of partition plates 23 are spaced apart in the cavity to partition the cavity into at least two confluence channel groups 21. The main plate 22 is the main body of the confluence plate 120, and mainly serves the installation and support function, and the partition plates 23 mainly serve the isolation function. The cavity mainly serves to guide the circulation of the heat exchange medium. The main plate 22 and the second mounting plate 14 together enclose to form the cavity, and the plurality of partition plates 23 are spaced apart in the cavity. It will be understood that the plurality of partition plates 23 can partition the cavity into at least two small cavities, each small cavity is the confluence channel group 21, so that heat exchange media with different flow rates can be respectively introduced into the at least two confluence channel groups 21, thereby enabling different heat exchange temperatures between the at least two confluence channel groups 21, and cooling the battery more effectively.

In some embodiments of the present disclosure, as shown in FIG. 3, the heat exchange channel group 111 is arranged with a first inlet 1211 and a first outlet 1212, the confluence channel group 21 includes an inlet channel 211 and an outlet channel 212, the first inlet 1211 of the heat exchange channel group 111 is in communication with the inlet channel 211 of the corresponding confluence channel group 21, and the first outlet 1212 of the heat exchange channel group 111 is in communication with the outlet channel 212 of the corresponding confluence channel group 21. The first inlet 1211 mainly serves to guide the heat exchange medium to flow in, and the first outlet 1212 mainly serves to guide the heat exchange medium to flow out. Similarly, the inlet channel 211 mainly serves to guide the heat exchange medium to flow in, and the outlet channel 212 mainly serves to guide the heat exchange medium to flow out.

By communicating the first inlet 1211 of the heat exchange channel group 111 with the inlet channel 211 of the corresponding confluence channel group 21, and by communicating the first outlet 1212 of the heat exchange channel group 111 with the outlet channel 212 of the corresponding confluence channel group 21, the heat exchange medium in the inlet channel 211 of the confluence channel group 21 will be split into the first inlet 1211 of the corresponding heat exchange channel group 111, and the heat exchange medium after heat exchange will flow from the first outlet 1212 of the heat exchange channel group 111 into the outlet channel 212 of the corresponding confluence channel group 21, thereby ensuring the accuracy of the flow paths for heat exchange media with different flow rates.

In some embodiments of the present disclosure, the first inlet 1211 of the heat exchange channel group 111 and the first outlet 1212 of the heat exchange channel group 111 are located on the same side. By arranging the first inlet 1211 and the first outlet 1212 of the heat exchange channel group 111 on the same side, the confluence plate 120 can be arranged on one side of the first inlet 1211 and the first outlet 1212 of the heat exchange channel group 111, thereby facilitating communicating the confluence plate 120 with the first inlet 1211 and first outlet 1212 of the heat exchange channel group 111, also facilitating the design and arrangement of the confluence channel group 21, and improving the integration rate of the heat exchange component.

In some embodiments of the present disclosure, as shown in FIG. 3, the heat exchange channel group 111 is arranged with a plurality of heat exchange channels 121, and the plurality of heat exchange channels 121 are spaced apart in a first direction. The heat exchange channel group 111 is arranged with a plurality of heat exchange channels 121, and the plurality of heat exchange channels 121 are spaced apart in a first direction, so that the arrangement is more reasonable, interference between two adjacent heat exchange channels 121 can be avoided, and the arrangement of the heat exchange channels 121 can be made more comprehensive, thereby enhancing the heat exchange effect of each heat exchange channel group 111.

Moreover, arranging a plurality of heat exchange channels 121, compared to arranging only one heat exchange channel 121, can shorten the flow distance of the heat exchange medium in the heat exchange channels 121 while ensuring a similar total heat exchange distance and heat exchange area, resulting in a smaller pressure drop of the heat exchange medium and greater energy saving. It can also avoid the problem of reduced cooling effect due to temperature rise of the heat exchange medium after long-distance heat exchange.

Furthermore, in some embodiments of the present disclosure, as shown in FIG. 3, among two adjacent heat exchange channels 121, the first inlet 1211 of one heat exchange channel 121 is arranged adjacent to the first outlet 1212 of the other heat exchange channel 121. It will be understood that since the heat exchange medium in the heat exchange channels 121 exchanges heat with the battery, the temperature of the heat exchange medium at the first inlet 1211 is lower than the temperature of the heat exchange medium at the first outlet 1212. Therefore, arranging the first inlet 1211 of one heat exchange channel 121 adjacent to the first outlet 1212 of the other heat exchange channel 121 can enhance heat exchange between the higher temperature heat exchange medium and the lower temperature heat exchange medium, and can improve the temperature uniformity performance of the battery pack.

It will be noted that the first inlet 1211 and the first outlet 1212 of the same heat exchange channel 121 are located on the same side, and the first inlet 1211 and the first outlet 1212 of the same heat exchange channel 121 are offset in the first direction. The first inlet 1211 and the first outlet 1212 of the same heat exchange channel 121 are located on the same side, so that after the confluence plate 120 is arranged, the confluence plate 120 can be simultaneously in communication with the first inlet 1211 and the first outlet 1212 of the same heat exchange channel 121, thereby facilitating the overall arrangement of the confluence plate 120. The first inlet 1211 and the first outlet 1212 of the same heat exchange channel 121 are offset in the first direction, thereby distinguishing the first inlet 1211 form the first outlet 1212 of the same heat exchange channel 121 in the first direction, such that the first inlet 1211 of the same heat exchange channel 121 can correspond to the inlet channel 211 on the confluence plate 120, and the first outlet 1212 corresponds to the outlet channel 212 on the confluence plate 120. Furthermore, since the first inlet 1211 and the first outlet 1212 of the same heat exchange channel 121 are offset in the first direction, the confluence plate 120 can be regularly arranged, the difficulty of manufacturing the confluence plate 120 can be reduced, and the integration efficiency of the confluence channel group can be improved.

Further, in some embodiments, the heat exchange channel 121 extends in a second direction, and in the second direction, a distance between the first inlet 1211 and the first outlet 1212 of the same heat exchange channel 121 is in a range of 5 mm to 8 mm. That is, in the same heat exchange channel 121, a certain interval is arranged between the first inlet 1211 and the first outlet 1212 in the second direction, and the range of the interval is relatively reasonable. This facilitates distinguishing of the positions of the first inlet 1211 and the first outlet 1212, and also facilitates the corresponding arrangement of the inlet channel 211 and the outlet channel 212 on the confluence plate 120. Furthermore, the above arrangement can also avoid the problem of the overall volume of the confluence plate 120 becoming too large after the inlet channel 211 and outlet channel 212 on the confluence plate 120 are correspondingly in communication with the first inlet 1211 and first outlet 1212, which would be inconvenient for arranging the confluence plate 120, and also avoid the problem of increased cost. Additionally, the above arrangement can ensure that the heat exchange channel group has sufficient heat exchange area, improving the heat exchange efficiency of the overall battery pack.

Additionally, the first inlets 1211 of the plurality of heat exchange channels 121 are spaced apart along a first straight line, and the first outlets 1212 of the plurality of heat exchange channels 121 are spaced apart along a second straight line. That is, the first inlets 1211 of the plurality of heat exchange channels 121 are all arranged along the first straight line, and the first outlets 1212 of the plurality of heat exchange channels 121 are all arranged along the second straight line. Thus, when arranging the inlet channel 211 and the outlet channel 212 on the confluence plate 120, the inlet channel 211 can also be arranged along the first straight line, and the outlet channel 212 can be arranged along the second straight line, facilitating the processing and arrangement of the inlet channel 211 and the outlet channel 212 on the confluence plate 120.

The first straight line is arranged parallel to the second straight line. That is, the first inlets 1211 of the plurality of heat exchange channels 121 are arranged in the first straight line, and the first outlets 1212 of the plurality of heat exchange channels 121 are arranged in the second straight line, and the first straight line is arranged parallel to the second straight line, so that the arrangement of the first inlets 1211 and first outlets 1212 of the plurality of heat exchange channels 121 can be arranged more orderly.

In an embodiment, both the first straight line and the second straight line coincide with the first direction. When both the first straight line and the second straight line coincide with the first direction, the first straight line is arranged vertically in the first direction, and the second straight line is also arranged vertically in the first direction, so that the arrangement of the first inlets 1211 and first outlets 1212 of the plurality of heat exchange channels 121 can be arranged more orderly, the processing and arrangement of the inlet channel 211 and the outlet channel 212 on the confluence plate 120 can be facilitated, thus reducing the overall volume of the confluence plate 120.

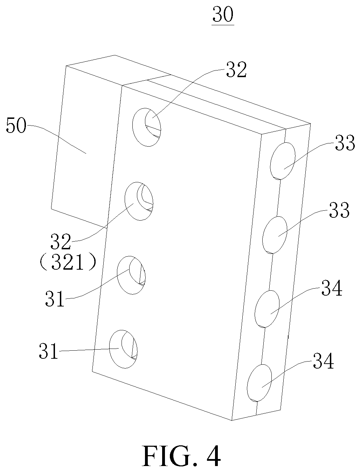

Additionally, in the embodiment of the present disclosure, as shown in FIGS. 4 to 6, the heat exchange assembly 1 further includes a valve component 30. The valve component 30 is arranged with a plurality of second inlets 31 and a plurality of second outlets 32. The confluence channel group 21 includes an inlet channel 211 and an outlet channel 212. One second inlet 31 is in communication with the outlet channel 212 of one confluence channel group 21, and one second outlet 32 is in communication with the inlet channel 211 of one confluence channel group 21. The valve component 30 is mainly configured to control the flow rate of the heat exchange medium. The second inlet 31 mainly serves to guide the heat exchange medium to flow into the valve component 30, and the second outlet 32 mainly serves to guide the heat exchange medium to flow out of the valve component 30. Similarly, the inlet channel 211 mainly serves to guide the heat exchange medium to flow in, and the outlet channel 212 mainly serves to guide the heat exchange medium to flow out.

It will be noted that the valve component 30 may be an integral structural member, a plurality of second inlets 31 and a plurality of second outlets 32 are arranged on the integral structural member. The valve component 30 may also be a split structure. For example, the valve component 30 includes a first valve and a second valve, a plurality of second inlets 31 are arranged on the first valve, and a plurality of second outlets 32 are arranged on the second valve.

Furthermore, in the above embodiment, the valve component 30 may be arranged with a plurality of second outlets 32, and the second inlets 31 may be arranged as one or more, and it suffices that the second inlet 31 is in communication with one outlet channel 212. Specifically, for the heat exchange component, it is only necessary to control the flow rate at the inlet to achieve control of the flow rate in the heat exchange channel group 111. Therefore, the present disclosure does not limit the number of the second inlets 31 of the valve component 30.

Specifically, one second inlet 31 is in communication with the outlet channel 212 of one confluence channel group 21. That is, the outlet channel 212 of each confluence channel group 21 has a corresponding second inlet 31 in communication therewith, so that the heat exchange medium in each outlet channel 212, after heat exchange, can flow into the valve component 30 through the corresponding second inlet 31, thereby discharging the heat exchange medium from the confluence channel group 21. Similarly, the second outlet 32 is correspondingly in communication with the inlet channel 211 of the confluence channel group 21 in a one-to-one configuration. That is, the inlet channel 211 of each confluence channel group 21 has a corresponding second outlet 32 in communication therewith. In this way, after flowing into the valve component 30, heat exchange media with different flow rates from the outside is introduced into the corresponding inlet channel 211 through the corresponding second outlet 32, and then can be entered into the corresponding heat exchange channel group 111, thereby achieving improved heat exchange and cooling of the battery.

Furthermore, in some embodiments of the present disclosure, the heat exchange assembly 1 further includes a second connection pipe and a first connection pipe. The second connection pipe is connected between the second inlet 31 and the outlet channel 212 of the confluence channel group 21, and the first connection pipe is connected between the second outlet 32 and the inlet channel 211 of the confluence channel group 21. Both the second connection pipe and the first connection pipe can serve a communicating function. By connecting the second connection pipe between the second inlet 31 and the outlet channel 212 of the confluence channel group 21, the second connection pipe can be configured to communicate the second inlet 31 with the outlet channel 212, so that the heat exchange medium in the confluence channel group 21 can flow from the outlet channel 212 into the valve component 30.

Similarly, by connecting the first connection pipe between the second outlet 32 and the inlet channel 211 of the confluence channel group 21, the first connection pipe can be configured to connect the second outlet 32 with the inlet channel 211, so that the external heat exchange medium can flow from the valve component 30 into the confluence channel group 21. The second connection pipe and the first connection pipe can be arranged and selected according to actual working conditions. For example, both the second connection pipe and the first connection pipe may be nylon pipes, or may also be made of other suitable materials.

Furthermore, in the above embodiment, for the heat exchange component, it is only necessary to control the flow rate at the inlet to achieve control of the flow rate in the heat exchange channel group 111. Therefore, the present disclosure does not limit the number of the second connection pipes either.

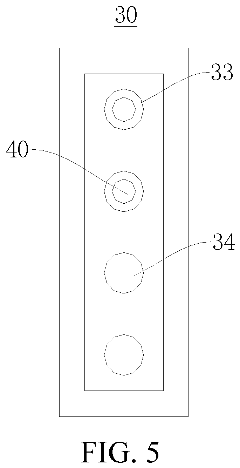

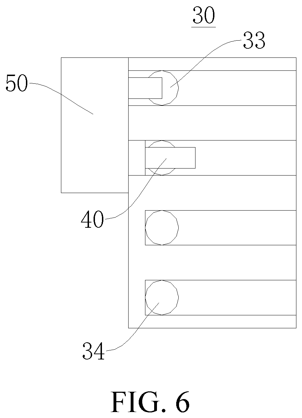

Furthermore, as shown in FIGS. 5 and 6, the heat exchange assembly 1 further includes an adjusting member 40. The adjusting member 40 is movably arranged at the second outlet 32 to adjust a flow area at the second outlet 32, or the adjusting member 40 is movably arranged in the first connection pipe to adjust a flow area in the first connection pipe.

The adjusting member 40 mainly serves an adjusting function and can control the flow rate of the heat exchange medium flowing through the valve component 30. It will be noted that the valve component 30 is further arranged with a third inlet 33 and a third outlet 34. The third inlet 33 is in communication with the second outlet 32, and the second inlet 31 is in communication with the third outlet 34. The heat exchange medium can be entered into the valve component 30 through the third inlet 33 and be introduced in the second outlet 32, or the heat exchange medium can be entered into the valve component 30 through the second inlet 31 and be introduced in the third outlet 34, thereby being discharged from the valve component 30.

The adjusting member 40 is movably arranged at the second outlet 32. Thus, when the adjusting member 40 does not block the second outlet 32, the flow area at the second outlet 32 does not change, and the heat exchange medium entering into the valve component 30 from the outside through the third inlet 33 can normally flow from the second outlet 32 into the confluence channel group 21. When the adjusting member 40 starts to move toward the second outlet 32, the adjusting member 40 can block the second outlet 32. Due to the blocking by the adjusting member 40, the flow area at the second outlet 32 is gradually reduced, thereby controlling the flow rate of the heat exchange medium at the second outlet 32. When a cross-sectional size of the adjusting member 40 is set to be the same as a cross-sectional size at the second outlet 32, and the adjusting member 40 completely blocks the second outlet 32, the heat exchange medium cannot pass through the second outlet 32 at this time, thereby preventing the heat exchange medium from being introduced into the confluence channel group 21. Certainly, the adjusting member 40 may also be movably arranged in the first connection pipe. By changing a length or a cross-sectional area by which the adjusting member 40 extends into the first connection pipe, a flow cross-sectional size of the heat exchange medium in the first connection pipe can be adjusted, thereby controlling the flow rate of the heat exchange medium. In this way, the flow rate of the heat exchange medium introduced into different confluence channel groups 21 can be controlled, thereby achieving improved heat exchange and cooling of the battery.

Additionally, as shown in FIGS. 4 and 6, the heat exchange assembly 1 further includes a control component 50. The control component 50 includes a driving member and a transmission member. The driving member is in driving cooperation with the transmission member, and the transmission member is in transmission cooperation with the adjusting member 40. The control component 50 mainly serves a control function and can control the movement of the adjusting member 40. The driving member mainly serves a driving function, and the transmission member mainly serves a transmission function. By having the driving member in driving cooperation with the transmission member, the driving member can provide power to the transmission member, so that the transmission member can perform corresponding actions. The transmission member is in transmission cooperation with the adjusting member 40, so that the transmission member can be configured to drive the adjusting member 40 to move. The movement of the adjusting member 40 can in turn control the flow area at the second outlet 32 or the flow area in the first connection pipe, thereby controlling the flow rate of the heat exchange medium. Furthermore, the movement of the adjusting member 40 may also be controlled by means of a spring, or certainly by other suitable control methods.

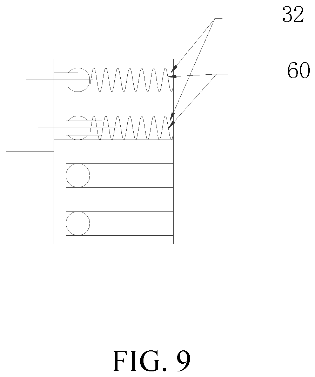

Further, as shown in FIG. 9, the heat exchange assembly 1 further includes a heating member 60. The heating member 60 is arranged in a channel of the valve component 30 in communication with the second outlet 32, and/or the heating member 60 is arranged in the first connection pipe. The heating member 60 mainly serves a heating function. By arranging the heating member 60 in the channel of the valve component 30 in communication with the second outlet 32, the heat exchange medium flowing from the outside into the valve component 30 can be heated, so that after the heated heat exchange medium enters the confluence channel group 21 through the second outlet 32, it can subsequently heat the battery. This situation is suitable for use in cold weather conditions. Certainly, the heating member 60 may also be arranged in the first connection pipe, thereby heating the heat exchange medium flowing through the first connection pipe; or the heating members 60 may be arranged both in the channel of the valve component 30 in communication with the second outlet 32 and in the first connection pipe, thereby heating the heat exchange medium more efficiently. The heating member 60 may be a heating wire.

Specifically, in an embodiment, under low-temperature heating conditions or under active thermal insulation conditions, the heat exchange medium in the edge battery region is additionally subjected to secondary heating, thereby achieving the regulation of different temperatures and different regions. Thus, in the entire electric system, refined thermal management regulation of different temperatures and different regions of the heat exchange medium can be achieved, ensuring that the battery always operates at a suitable temperature, and reducing the temperature difference among the batteries in the battery pack system.

In an embodiment, the heat exchange component 10 includes a first heat exchange member 110 and a second heat exchange member. The valve component 30 has a first side and a second side oppositely arranged. Each of the first side and the second side is arranged with a plurality of second inlets 31 and a plurality of second outlets 32. The plurality of second inlets 31 and the plurality of second outlets 32 located on the first side are respectively in communication with the confluence member 20 arranged on the first heat exchange member 110, and the plurality of second inlets 31 and the plurality of second outlets 32 located on the second side are respectively in communication with the confluence member 20 arranged on the second heat exchange member.

Both the first heat exchange member 110 and the second heat exchange member can serve a heat exchange function, so that the first heat exchange member 110 and the second heat exchange member can achieve a double-layer heat exchange effect, thereby achieving improved heat exchange of the battery according to the arrangement of double-layer heat exchange. The valve component 30 is arranged with a plurality of second inlets 31 and a plurality of second outlets 32 on both opposite sides, so that the heat exchange medium flowing from the outside into the valve component 30 can flow into the confluence member 20 through the plurality of second outlets 32, and similarly, the heat exchange medium in the confluence member 20 can also flow into the valve component 30 through the plurality of second inlets 31.

The plurality of second inlets 31 and the plurality of second outlets 32 located on the first side are respectively in communication with the confluence member 20 arranged on the first heat exchange member 110, and the plurality of second inlets 31 and the plurality of second outlets 32 located on the second side are respectively in communication with the confluence member 20 arranged on the second heat exchange member. Specifically, the heat exchange medium entering into the valve component 30 can flow into the first heat exchange member 110 through the second outlets 32 on the first side, and then after heat exchange, flow back into the valve component 30 through the second inlets 31 on the first side, and then be discharged. Similarly, the heat exchange medium entering into the valve component 30 can flow into the second heat exchange member through the second outlets 32 on the second side, and then after heat exchange, flow back into the valve component 30 through the second inlets 31 on the second side, and then be discharged. In this way, while providing the heat exchange medium to the first heat exchange member 110 and the second heat exchange member, arrangement space can be saved. It will be noted that the flow rate and the opening/closing time of the heat exchange medium entering the first heat exchange member 110 and the second heat exchange member from the valve component 30 can be independently controlled by the above adjusting member 40.

In an embodiment, one side of the valve component 30 is arranged with a plurality of second outlets 32. The second outlet 32 includes a first heat exchange outlet 321 and a second heat exchange outlet. The plurality of first heat exchange outlets 321 are respectively in communication with the confluence member 20 arranged on the first heat exchange member 110, and the plurality of second heat exchange outlets are respectively in communication with the confluence member 20 arranged on the second heat exchange member. That is, all the second outlets 32 can be arranged on one side of the valve component 30, and then the second outlets 32 are divided into the first heat exchange outlets 321 and the second heat exchange outlets. The plurality of first heat exchange outlets 321 are respectively in communication with the confluence member 20 arranged on the first heat exchange member 110, and the plurality of second heat exchange outlets are respectively in communication with the confluence member 20 arranged on the second heat exchange member. In this way, the heat exchange medium can also be respectively introduced into the first heat exchange member 110 and the second heat exchange member through the valve component 30, achieving joint heat exchange of the first heat exchange member 110 and the second heat exchange member.

Both the above first heat exchange member 110 and the second heat exchange member include a plurality of heat exchange channel groups 111 and a plurality of confluence channel groups 21. Accordingly, the arrangement of the first heat exchange member 110 and the second heat exchange member enables heat exchange with objects such as the battery in different directions and positions, thereby improving cooling efficiency.

As an embodiment, the valve component 30 is a solenoid valve. That is, the valve component 30 can be selected as a solenoid valve, facilitating controlling the flow rate of the heat exchange medium within the valve component 30. Moreover, solenoid valves generally have a small volume, saving installation space and having a faster response speed.

As shown in FIG. 7, it will be noted that the heat exchange component 10 can also be divided into a plurality of module regions. For example, the upper part of FIG. 7 is a first module region 2, and the lower part of FIG. 7 is a second module region 3. In this way, through the cooperation between the confluence member 20 and the plurality of heat exchange channel groups 111, the flow rate and the opening/closing time of the heat exchange medium in the first module region 2 and the second module region 3 can be independently controlled, thereby independently controlling the flow rate at different positions of the battery in the first module region 2 and the second module region 3. That is, the flow rate at different positions of the battery in both the first module region 2 and the second module region 3 can be regulated.

Furthermore, in the first module region 2 or the second module region 3, a plurality of heat exchange channel groups 111 are also arranged, and each of the heat exchange channels can correspondingly control the flow rate independently, thereby achieving temperature regulation at different positions of the battery component.

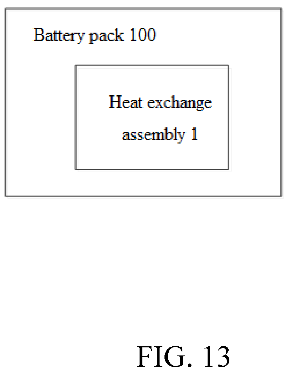

A battery pack 100 according to an embodiment of the present disclosure, as shown in FIG. 13, includes the heat exchange assembly 1 according to any one of the above embodiments.

The heat exchange assembly 1 is configured to perform heat exchange on the battery component, thereby improving the performance of the battery component. Specifically, when the battery component is charged or discharged or under other operating conditions, the temperature of some regions and other regions may be inconsistent, resulting in different temperature regions in the battery, thus resulting in limited performance of the battery component. By applying the heat exchange assembly 1 disclosed in the embodiment of the present disclosure, the flow rate of the heat exchange medium in different heat exchange channel groups 111 can be independently adjusted, thereby achieving regulation of the temperature of different temperature regions in the battery component, thus reducing the temperature difference between different positions of the battery component and improving the temperature uniformity of the battery component.

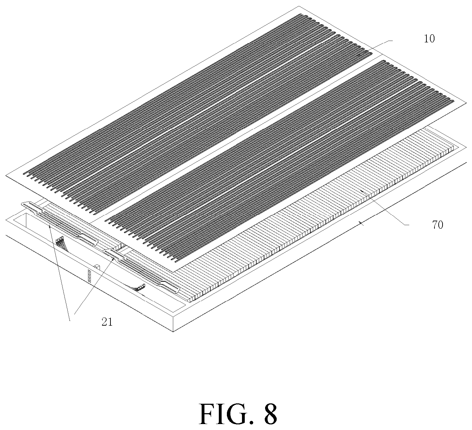

As shown in FIG. 8, the battery pack 100 further includes a battery component 70. The battery component 70 includes at least a first temperature region and a second temperature region. One heat exchange channel group 111 of the heat exchange component 10 is arranged corresponding to the first temperature region, and the other heat exchange channel group 111 is arranged corresponding to the second temperature region, so as to independently adjust the battery temperature in the first temperature region and the second temperature region. That is, at least a first temperature region and a second temperature region with different temperatures are formed on the battery component 70. One heat exchange channel group 111 is arranged corresponding to the first temperature region, and the heat exchange channel group 111 can perform heat exchange and cooling of the battery component 70 located in the first temperature region. The other heat exchange channel group 111 is arranged corresponding to the second temperature region, and the heat exchange channel group 111 can perform heat exchange and cooling of the battery component 70 located in the second temperature region. In this way, the battery temperature in the first temperature region and the second temperature region can be independently adjusted, enhancing the heat exchange and cooling effect of the battery component 70.

Furthermore, the battery pack 100 further includes a plurality of heat exchange members 11. The battery component 70 includes a plurality of single batteries. The single batteries extend in a first direction, the plurality of single batteries are arranged in a second direction, and the first direction is perpendicular to the second direction. The single battery is arranged with terminals. A region of the battery component 70 adjacent to the terminals of each single battery is a first temperature region, and the remaining region of the battery component 70 excluding the first temperature region is a second temperature region. One heat exchange channel group 111 of the heat exchange component 10 is aligned with and exchanges heat with a portion of the battery component 70 corresponding to the first temperature region in a third direction. The other heat exchange channel group 111 of the heat exchange component is aligned with and exchanges heat with a portion of the battery component 70 corresponding to the second temperature region in the third direction. The third direction is perpendicular to the first direction and the second direction.

It will be noted that one heat exchange channel group 111 of the heat exchange component is a first heat exchange channel group, and the other heat exchange channel group 111 of the heat exchange component is a second heat exchange channel group. Specifically, the temperature of the single battery is higher at positions adjacent to the terminals, i.e., the first temperature region, while the temperature at other positions is relatively lower, i.e., the second temperature region. Both the first heat exchange channel group and the second heat exchange channel group can serve a heat exchange function. The first heat exchange channel group is aligned with and exchanges heat with a portion of the battery component 70 corresponding to the first temperature region, and the second heat exchange channel group is aligned with and exchanges heat with a portion of the battery component 70 corresponding to the second temperature region, so that the flow rates in the first heat exchange channel group and the second heat exchange channel group can be independently adjusted, thereby ensuring the temperature uniformity of the battery component and enhancing the overall heat exchange effect of the battery component 70.

Each single battery at least has two terminals, and the two terminals are respectively arranged at two ends of the corresponding single battery in the first direction. The first temperature region has a first sub-temperature region and a second sub-temperature region. A corresponding portion of the battery component 70 adjacent to the terminal on one side is the first sub-temperature region, a corresponding portion of the battery component 70 adjacent to the terminal on the other side is the second sub-temperature region, and the second temperature region is located between the first sub-temperature region and the second sub-temperature region. One heat exchange channel group 111 in the heat exchange component has a first heat exchange sub-channel group and a second heat exchange sub-channel group. The first heat exchange sub-channel group exchanges heat with a portion of the battery component 70 corresponding to the first sub-temperature region, and the second heat exchange sub-channel group exchanges heat with a portion of the battery component 70 corresponding to the second sub-temperature region.

That is, terminals are arranged at two ends of the single battery in the first direction. Correspondingly, a first sub-temperature region and a second sub-temperature region are respectively formed at the two ends of the single battery in the first direction, and the region between the first sub-temperature region and the second sub-temperature region is the second temperature region. The first heat exchange member 110 is divided into a first heat exchange sub-channel group and a second heat exchange sub-channel group. The first heat exchange sub-channel group performs heat exchange on the portion of the battery component 70 corresponding to the first sub-temperature region, and the second heat exchange sub-channel group performs heat exchange on the portion of the battery component 70 corresponding to the second sub-temperature region. This ensures effective heat exchange and cooling at the positions of both terminals of the single battery, thereby enabling the battery component 70 to operate normally and stably.

In addition, the first heat exchange member 110 forms a first heat exchange region, and the first heat exchange region is corresponding to the first temperature region. The second heat exchange member forms a second heat exchange region, the second heat exchange region is corresponding to the second temperature region. The first heat exchange region includes a first region and a second region, the first region and the second region are respectively arranged on opposite sides of the second heat exchange region. According to the above, compared with the second heat exchange region, the heat exchange effect of the first heat exchange region is better. The first heat exchange region corresponds to positions at two ends of the battery component 70 in the first direction, i.e., the first region and the second region respectively correspond to positions at two ends of the battery component 70 in the first direction. Correspondingly, the second heat exchange region is located in the middle between the first region and the second region. In this way, heat exchange and cooling of the battery component 70 can be performed more effectively.

Furthermore, in the embodiment of the present disclosure, the heat exchange component is arranged on one side of the battery component 70 to perform heat exchange on the entire battery component 70, thereby improving the temperature uniformity of the battery component 70.

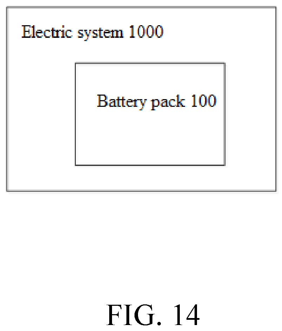

An electric system 1000 according to an embodiment of the present disclosure includes the battery pack 100 according to the above embodiments, as shown in FIG. 14. The electric system 1000 includes a vehicle or an energy storage system or an energy storage cabinet, etc.

In the description of the present disclosure, it will be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships according to the orientations or positional relationships shown in the drawings, and are only for the convenience of describing the present disclosure and simplifying the description, and do not indicate or imply that the device or element referred to must have a specific orientation, be constructed and operate in a specific orientation, and therefore will not be construed as limiting the present disclosure.

In the description of the present disclosure, "first feature" and "second feature" may include one or more of these features. In the description of the present disclosure, "a plurality of" means two or more. In the description of the present disclosure, a first feature being "above" or "below" a second feature may include direct contact between the first and second features, or may include the first and second features not being in direct contact but being in contact through another feature between them. In the description of the present disclosure, a first feature being "on", "above", or "over" a second feature includes the first feature being directly above and obliquely above the second feature, or merely indicates that the horizontal level of the first feature is higher than that of the second feature.

In the description of this specification, descriptions with reference to terms such as "one embodiment", "some embodiments", "schematic embodiment", "example", "specific example", or "some examples" mean that specific features, structures, materials, or characteristics described in connection with the embodiment or example are included in at least one embodiment or example of the present disclosure. In this specification, schematic representations of the above terms do not necessarily refer to the same embodiment or example.

Although embodiments of the present disclosure have been shown and described, a person skilled in the art will understand that various changes, modifications, substitutions, and alterations can be made to these embodiments without departing from the principles and spirit of the present disclosure, the scope of which is defined by the claims and their equivalents.

## Claims

1. A heat exchange assembly (1), configured to perform exchange heat on a battery in a battery pack, comprising:
a heat exchange component (10), the heat exchange component (10) at least comprising two heat exchange channel groups (111), the two heat exchange channel groups (111) being independently arranged, and
the heat exchange component (10) further at least comprising two confluence channel groups (21), the two confluence channel groups (21) being independently arranged, and each of the heat exchange channel groups (111) being correspondingly in communication with one confluence channel group (21).

2. The heat exchange assembly (1) according to claim 1, wherein the heat exchange component (10) comprises:
a flow channel plate (12);
a first mounting plate (13), the heat exchange channel group (111) being defined between the first mounting plate (13) and the flow channel plate (12);
a confluence plate (120); and
a second mounting plate (14), the confluence channel group (21) being defined between the second mounting plate (14) and the confluence plate (120), and the confluence channel group (21) being in communication with the heat exchange channel group (111).

3. The heat exchange assembly (1) according to claim 2, wherein the first mounting plate (13) and the second mounting plate (14) are oppositely arranged, the flow channel plate (12) is arranged on a side of the first mounting plate (13) away from the second mounting plate (14), and the confluence plate (120) is arranged on a side of the second mounting plate (14) away from the first mounting plate (13).

4. The heat exchange assembly (1) according to claim 2 or 3, wherein the first mounting plate (13) and the second mounting plate (14) are arranged in close contact, and the first mounting plate (13) is arranged with a first through hole (131) communicating with the heat exchange channel group (111), the second mounting plate (14) is arranged with a second through hole (141) communicating with the confluence channel group (21), and the first through hole (131) is in communication with the second through hole (141), to ensure the heat exchange channel group (111) is in communication with the corresponding confluence channel group (21).

5. The heat exchange assembly (1) according to any one of claims 2 to 4, wherein the confluence plate (120) comprises:
a main plate (22), the main plate (22) and the second mounting plate (14) together enclosing to form a cavity; and
a plurality of partition plates (23), the plurality of partition plates (23) being spaced apart in the cavity to partition the cavity into at least two confluence channel groups (21).

6. The heat exchange assembly (1) according to any one of claims 1 to 5, wherein the heat exchange channel group (111) is arranged with a first inlet (1211) and a first outlet (1212), the confluence channel group (21) comprises an inlet channel (211) and an outlet channel (212), the first inlet (1211) of the heat exchange channel group (111) is in communication with the inlet channel (211) of the corresponding confluence channel group (21), and the first outlet (1212) of the heat exchange channel group (111) is in communication with the outlet channel (212) of the corresponding confluence channel group (21).

7. The heat exchange assembly (1) according to claim 6, wherein the first inlet (1211) of the heat exchange channel group (111) and the first outlet (1212) of the heat exchange channel group (111) are located on the same side.

8. The heat exchange assembly (1) according to claim 6 or 7, wherein the heat exchange channel group (111) is arranged with a plurality of heat exchange channels (121), and the plurality of heat exchange channels (121) are spaced apart in a first direction.

9. The heat exchange assembly (1) according to claim 8, wherein the first inlet (1211) and the first outlet (1212) of the same heat exchange channel (121) are located on the same side and are offset in the first direction.

10. The heat exchange assembly (1) according to claim 8 or 9, wherein the heat exchange channel (121) extends in a second direction, and in the second direction, a distance between the first inlet (1211) and the first outlet (1212) of the same heat exchange channel (121) is in a range of 5 mm to 8 mm.

11. The heat exchange assembly (1) according to any one of claims 8 to 10, wherein the first inlets (1211) of the plurality of heat exchange channels (121) are spaced apart along a first straight line, and the first outlets (1212) of the plurality of heat exchange channels (121) are spaced apart along a second straight line.

12. The heat exchange assembly (1) according to claim 11, wherein the first straight line is arranged parallel to the second straight line.

13. The heat exchange assembly (1) according to claim 11 or 12, wherein both the first straight line and the second straight line coincide with the first direction.

14. The heat exchange assembly (1) according to any one of claims 2 to 13, wherein the first mounting plate (13) and the second mounting plate (14) are of an integral structure.

15. The heat exchange assembly (1) according to any one of claims 1 to 14, wherein further comprises:
a valve component (30), the valve component (30) is arranged with a plurality of second outlets (32), the confluence channel group (21) comprises an inlet channel (211), and one of the second outlets (32) is in communication with the inlet channel (211) of one of the confluence channel groups (21).

16. The heat exchange assembly (1) according to claim 15, wherein further comprises:
a first connection pipe, the first connection pipe is connected between the second outlet (32) and the inlet channel (211) of the confluence channel group (21).

17. The heat exchange assembly (1) according to claim 16, wherein further comprises:
an adjusting member (40), the adjusting member (40) is movably arranged at the second outlet (32) to adjust a flow area at the second outlet (32); or
the adjusting member (40) is movably arranged in the first connection pipe to adjust a flow area in the first connection pipe.

18. The heat exchange assembly (1) according to claim 16 or 17, wherein further comprises a heating member (60), wherein:
the heating member (60) is arranged in a channel of the valve component (30) in communication with the second outlet (32); and/or
the heating member (60) is arranged in the first connection pipe.

19. The heat exchange assembly (1) according to any one of claims 15 to 18, wherein the heat exchange component (10) comprises a first heat exchange member (110) and a second heat exchange member, the valve component (30) has a first side and a second side oppositely arranged, both the first side and the second side are arranged with a plurality of the second outlets (32), the plurality of second outlets (32) located on the first side are respectively in communication with the confluence member (20) arranged on the first heat exchange member (110), and the plurality of second outlets (32) located on the second side are respectively in communication with the confluence member (20) arranged on the second heat exchange member; or
one side of the valve component (30) is arranged with a plurality of the second outlets (32), the second outlet (32) comprises a first heat exchange outlet (321) and a second heat exchange outlet, the plurality of first heat exchange outlets (321) are respectively in communication with the confluence member (20) arranged on the first heat exchange member (110), and the plurality of second heat exchange outlets are respectively in communication with the confluence member (20) arranged on the second heat exchange member.

20. The heat exchange assembly (1) according to any one of claims 15 to 19, wherein the valve component (30) is further arranged with a plurality of second inlets (31), the confluence channel group (21) further comprises an outlet channel (212), and one of the second inlets (31) is in communication with the outlet channel (212) of one of the confluence channel groups (21).

21. A battery pack (100), comprising the heat exchange assembly (1) according to any one of claims 1 to 20.

22. The battery pack (100) according to claim 21, wherein further comprises a battery component (70), the battery component (70) at least comprises a first temperature region and a second temperature region, wherein one of the heat exchange channel groups (111) of the heat exchange component (10) is arranged corresponding to the first temperature region, and the other heat exchange channel group (111) is arranged corresponding to the second temperature region, to independently adjust the battery temperature in the first temperature region and the second temperature region.

23. The battery pack (100) according to claim 22, wherein the battery component (70) comprises a plurality of single batteries, the single batteries extend in a first direction, the plurality of single batteries are arranged in a second direction, the first direction is perpendicular to the second direction;
the single battery is arranged with a terminal, a region of the battery component (70) adjacent to the terminal of each of the single batteries is the first temperature region, and the remaining region of the battery component (70) excluding the first temperature region is the second temperature region;
one of the heat exchange channel groups (111) of the heat exchange component (10) exchanges heat with a portion of the battery component (70) corresponding to the first temperature region, and the other heat exchange channel group (111) of the heat exchange component (10) exchanges heat with a portion of the battery component (70) corresponding to the second temperature region.

24. The battery pack (100) according to claim 23, wherein each of the single batteries at least has two terminals, the two terminals are respectively arranged at two ends of the corresponding single battery in the first direction, the first temperature region has a first sub-temperature region and a second sub-temperature region, wherein a corresponding portion of the battery component (70) adjacent to the terminal on one side is the first sub-temperature region, a corresponding portion of the battery component (70) adjacent to the terminal on the other side is the second sub-temperature region, and the second temperature region is located between the first sub-temperature region and the second sub-temperature region;
one of heat exchange channel groups (111) in the heat exchange component (10) has a first heat exchange sub-channel group and a second heat exchange sub-channel group, wherein the first heat exchange sub-channel group exchanges heat with a portion of the battery component (70) corresponding to the first sub-temperature region, and the second heat exchange sub-channel group exchanges heat with a portion of the battery component (70) corresponding to the second sub-temperature region.

25. The battery pack (100) according to any one of claims 22 to 24, wherein the heat exchange component (10) is arranged on one side of the battery component (70).

26. An electric system (1000), comprising the battery pack (100) according to any one of claims 21 to 25.
